# FASCICULE DE BREVET EUROPEEN

(11) **EP 3 726 155 B1**
(45) Date de publication et mention de la délivrance du brevet: **13.07.2022**
(21) Numéro de dépôt: 20170109.1
(22) Date de dépôt: 17.04.2020
(51) Int. Cl.: F24F 7/08, F24F 12/00, F24F 13/08

(54) **SYSTÈME DE VENTILATION ET PROCÉDÉ DE NETTOYAGE D'UN TEL SYSTÈME**
BELÜFTUNGSANLAGE UND VERFAHREN ZUR REINIGUNG DERSELBEN
VENTILATION SYSTEM AND METHOD FOR CLEANING THE SAME

(30) Priorité: 18.04.2019 EP 19170021
(43) Date de publication de la demande: 21.10.2020
(73) Titulaire: Hanouna, Aimé, 1208 Genève (CH)
(72) Inventeur: Hanouna, Aimé, 1208 Genève (CH)
(74) Mandataire: KATZAROV S.A.

(56) Documents cités:
- EP-A2- 2 372 264
- EP-A2- 2 407 727
- DE-A1-102015 108 698
- FR-A1- 3 003 018
- US-A- 4 589 476

## Description

### DOMAINE TECHNIQUE DE L'INVENTION

La présente invention se rapporte à un dispositif et un procédé de nettoyage pour des installations de ventilation et de climatisation, et plus particulièrement pour des installations de renouvellement d'air.

### ETAT DE LA TECHNIQUE

De nos jours, tous les bâtiments comprennent des systèmes de renouvellement d'air pour procurer de l'air frais et propre à ses occupants. Le principe de fonctionnement général des systèmes de renouvellement d'air dans un bâtiment ou dans un local, comprend des monoblocs double flux comprenant un flux dit de pulsion et un flux dit de reprise. Ces monoblocs permettent d'une part, d'apporter une quantité d'air traité grâce à de l'air pulsé via le flux de pulsion, et d'autre part, d'en retirer, de préférence simultanément, la même quantité d'air vicié, appelé air repris, via le flux de reprise.

Comme tout élément de ventilation, ces flux emmagasinent de la poussière et autres saletés au fil du temps et nécessitent un nettoyage régulier.

Le document EP 2 407 727 A2 divulgue un système de ventilation conforme au préambule de la revendication 1, ainsi qu'un procédé de nettoyage d'un tel système.

Le nettoyage à sec des installations de ventilation est en général réalisé par un système de brosses rotatives qui permettent de décoller, par une action mécanique, les poussières emmagasinées dans les systèmes de ventilation.

Parallèlement, dans le cas d'une installation d'extraction c'est à dire dans les conduits servant au flux de reprise, une dépression, c'est-à-dire une aspiration, est utilisée pour récupérer les poussières soulevées par le brossage pour être évacuées et récupérer sur les filtres du monobloc de reprise qui peuvent être ensuite renouvelés. Cela permet de nettoyer convenablement les installations d'extraction.

En revanche, en ce qui concerne les installations de pulsion servant de conduits au flux de pulsion, cette technique n'est pas possible étant donné que la surpression qui est générée dans les gaines rejetterait les poussières soulevées par le brossage dans les locaux desservis de l'immeuble.

De même, dans l'hypothèse que ces nettoyages soient entrepris avec une installation à l'arrêt, les poussières soulevées ne pourraient pas être évacuées et resteraient en suspension dans les gaines. Dans ce cas, lors de la remise en service de la ventilation, les poussières seraient rejetées dans les locaux et les contamineraient.

Alternativement, une seconde hypothèse consisterait à nettoyer les installations de pulsion en maintenant l'installation en marche, dans ce cas, les poussières seront propulsées, là aussi, dans les locaux desservis et ne résoudrait pas le problème.

Il apparait donc clairement qu'il existe une difficulté majeure dans le nettoyage des gaines de ventilation en surpression, c'est-à-dire pour les flux d'air pulsé. La solution idéale consisterait à brosser les surfaces des gaines en évitant que les poussières soulevées ne s'échappent à l'intérieur du bâtiment et contaminent les locaux ventilés.

Un objet de la présente invention est donc de résoudre les problèmes décrits ci-dessus, et plus particulièrement de fournir un système et un procédé de nettoyage de système d'aération, notamment de renouvellement d'air, permettant de nettoyer les installations d'air pulsé sans risquer une propagation des poussières à l'intérieur du bâtiment.

### OBJET DE L'INVENTION

A cet effet, un premier aspect de la présente invention se rapporte à un système de ventilation pour un bâtiment , tel que défini en revendication 1.

Selon un mode de réalisation préféré, le générateur de dépression et le générateur de surpression sont logés dans un même monobloc double flux comprenant un flux de pulsion et un flux de reprise.

De manière avantageuse, les systèmes de clapets comprennent des clapets coupe-feu et/ou des clapets de réglages de débits d'air.

De manière avantageuse, lors d'un nettoyage de l'installation d'aspiration du système de ventilation, les systèmes de clapets sont agencés pour, lors de diriger et concentrer la dépression dans le système de conduits de l'installation d'aspiration où les travaux de nettoyage sont réalisés.

Selon un mode de réalisation préféré, le système de dérivation comprend un conduit détachable reliant un conduit d'aspiration à un conduit de pulsion en amont du générateur de dépression.

De préférence, le système de ventilation comprend le système de dérivation intégré.

Selon un deuxième aspect, la présente invention vise un procédé de nettoyage d'un système de ventilation du premier aspect de l'invention, comprenant une étape de mise en place d'un système de dérivation entre l'installation de pulsion et l'installation de reprise afin de les mettre en communication fluidique, une première étape d'actionnement de systèmes de premiers clapets pour couper la communication entre les conduits d'aspiration et le générateur de dépression, une seconde étape d'actionnement de systèmes de seconds clapets pour diriger et concentrer une dépression dans un premier système de conduits de l'installation de pulsion où les travaux de nettoyage sont réalisés, et une étape de contrôle du générateur de dépression de sorte à générer ladite dépression.

De manière avantageuse, le procédé de nettoyage comprend en outre une étape préliminaire d'arrêt des générateurs de dépression et de surpression

De préférence, la seconde étape d'actionnement des systèmes de seconds clapets et l'étape de contrôle du générateur sont répétées pour chaque conduit de l'installation de pulsion où les travaux de nettoyage sont réalisés

Selon un mode de réalisation préféré, le procédé de nettoyage comprend en outre une étape de brossage des conduits où les travaux de nettoyage sont réalisés antérieure à l'étape de contrôle du générateur.

Comme on peut le voir, la présente invention se rapporte à un système et à un procédé consistant à mettre l'installation de pulsion en dépression afin de la nettoyer aussi facilement qu'une installation de reprise.

Toutefois, le débit d'air élevé de certaines installations ne permet pas l'utilisation d'aspirateur ou de machine externe pour réaliser une dépression suffisante permettant l'évacuation des poussières soulevées. Ce type de technique n'est en effet valable que pour des petites débits et surfaces accessibles par des aspirateurs industriels, pas pour des installations d'immeuble, par exemple.

Pour contourner cette difficulté technique, la présente invention utilise la dépression du monobloc de reprise de l'installation traitée (même débit) pour créer une dépression suffisante qui puisse mettre toute l'installation de pulsion en dépression (débit d'air pulsion et reprise équivalent).

Pour mettre en œuvre cette technique, une dérivation est réalisée entre les gaines de pulsion et les gaines de reprise afin de créer une communication fluidique entre les deux installations, celle de reprise et celle puisée. Egalement, la présente invention utilise les clapets coupe-feu et les clapets de réglages de débits d'air pour diriger et concentrer la dépression sur la branche sur laquelle les travaux de nettoyage sont réalisés.

La technique actuelle permet également de raccorder un ventilateur centrifuge posé sur roulette pour créer une dépression.

Alternativement il est possible de poser sur roulette un ventilateur ayant un débit équivalent aux installations traitées pour les nettoyer.

Toutefois, les installations desservant des gros bâtiments (usines, hôpitaux, industrie, etc.) traitent des volumes d'air qui sont largement au-dessus des volumes traités par des ventilateurs mobiles.

La technique de la dérivation peut être mise en œuvre pour tout type d'installation, quel que soit le volume traité.

Mieux encore, elle permet de diriger et de concentrer la dépression directement sur la branche de l'installation que l'on souhaite nettoyer, et ce sans aucun risque de polluer ou de contaminer les locaux desservis compte tenu de la dépression à laquelle nous soumettons la section traitée.

### BREVE DESCRIPTION DES FIGURES

D'autres avantages, buts et caractéristiques particulières de l'invention ressortiront de la description non limitative qui suit d'au moins un mode de réalisation particulier du dispositif et du procédé objets de la présente invention, en regard des dessins annexés, dans lesquels :
- les figures 1A à 1C représentent, schématiquement un système de ventilation pour un bâtiment selon un premier mode de réalisation de l'invention et son procédé de nettoyage, et
- les figures 2A et 2B représentent, schématiquement, un système de ventilation pour un bâtiment selon un second mode de réalisation de l'invention et son procédé de nettoyage.
- les figures 3A et 3B représentent, schématiquement, un système de ventilation pour un bâtiment selon un troisième mode de réalisation de l'invention et son procédé de nettoyage.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse. On note dès à présent que les figures ne sont pas à l'échelle.

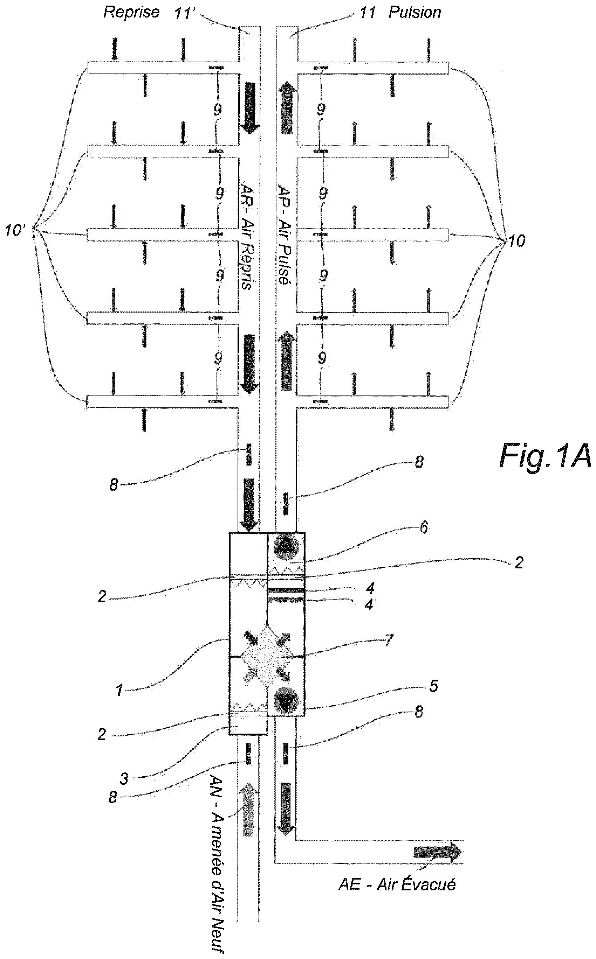

On observe, sur la figure 1A, qui n'est pas à l'échelle, une vue schématique d'un mode de réalisation du système de ventilation pour un bâtiment comprenant une installation de reprise et une installation de pulsion.

Comme on peut le voir, l'installation de reprise comprend un système de conduits 10', 11' et de clapets 8, 9 et un générateur de dépression 5 destinés à aspirer de l'air intérieur au bâtiment et l'expulser hors du bâtiment. De son côté, l'installation de pulsion comprend un système de conduits 10, 11 et de clapets 8, 9 et un générateur de surpression 6 destinés à envoyer de l'air extérieur dans le bâtiment. Il est à noter qu'il existe plusieurs types de clapets, à savoir des clapets coupe-feu 8 et des clapets de réglages de débits d'air 9.

En effet, comme on peut le voir, les systèmes de conduits montrent, pour chaque installation un conduit principal 11, 11' sur lequel est installé un monobloc 1 (dans le premier mode de réalisation) ainsi qu'une pluralité de conduits secondaires 10, 10' reliés au conduit principal 11, 11' et alimentant/alimenté par divers étages/pièces/régions du bâtiment.

Dans le premier mode de réalisation représenté sur les figures 1A à 1C, le générateur de dépression 5 et le générateur de surpression 6 sont logés dans un même monobloc double flux 1 comprenant un flux de pulsion 3, 7, 6 et un flux de reprise 7, 5. Ce monobloc 1 comprend égaiement divers autres éléments tels qu'un récupérateur 7, des filtres 2 ainsi que, dans le conduit d'air pulsé, des échangeurs de chaleurs 4, 4' pour chauffer ou refroidir l'air.

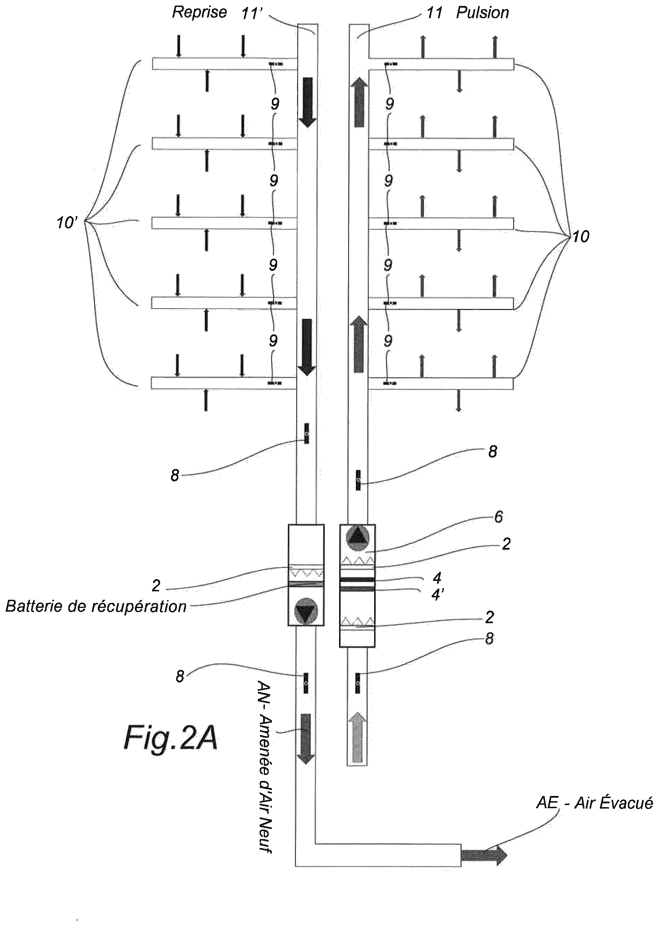

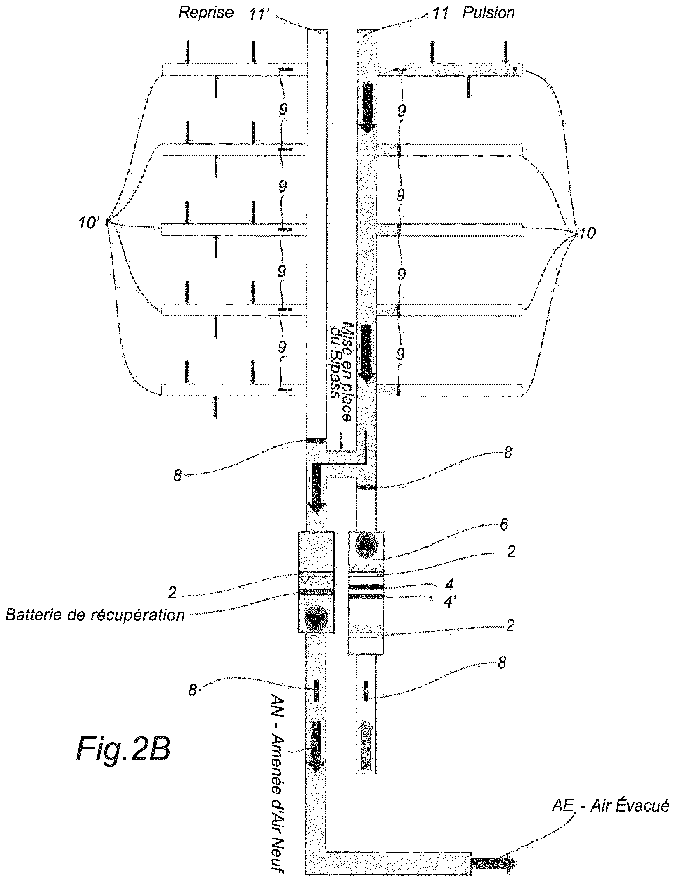

Dans le second mode de réalisation représenté aux figures 2A et 2B, le système de ventilation comprend deux blocs séparés un sur chaque installation, sans récupérateur mais présentant de préférence également des filtres 2 ainsi que, dans le conduit d'air pulsé, des échangeurs de chaleurs 4, 4' pour chauffer ou refroidir l'air.

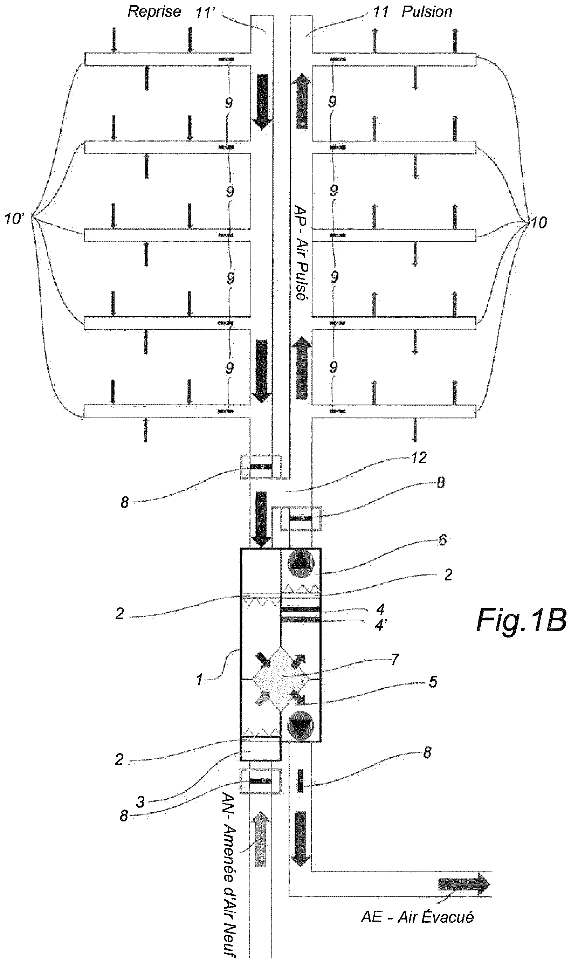

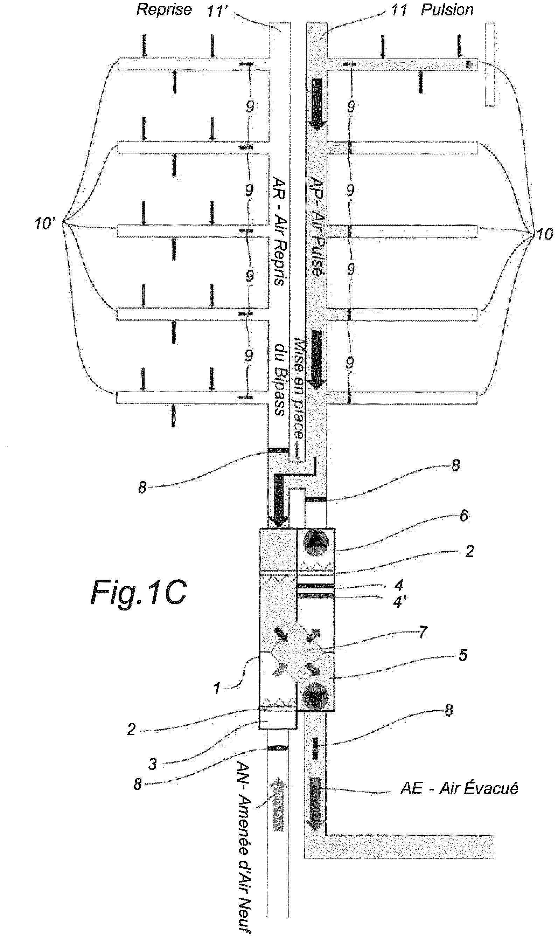

Selon l'invention, comme représenté sur les figures 1B et 2B, lors d'un nettoyage de l'installation de pulsion du système de ventilation, l'installation de pulsion et l'installation de reprise sont agencées pour être mises en communication par un système de dérivation 12, de sorte à ce que le générateur de dépression 5 de l'installation de reprise puisse générer une dépression dans le système de conduits 10, 11 de l'installation de pulsion. Afin de pouvoir faire cela et comme représenté sur la figure 1C, les systèmes de clapets 8, 9 sont agencés pour, lors de diriger et concentrer la dépression dans le système de conduits 10, 11 de l'installation de pulsion où les travaux de nettoyage sont réalisés.

De préférence, le système de dérivation 12 comprend un conduit détachable, tel qu'une gaine, reliant un conduit d'aspiration 11' à un conduit de pulsion 11 en aval du générateur de déprèssion 5. Par « en aval du générateur de dépression » il doit être compris évidemment que le système de dérivation 12 est placé entre le générateur de dépression 5 et les conduits 11, 10 de l'installation de pulsation à nettoyer, et de préférence également entre le générateur de dépression 5 et les conduits secondaires 10 de l'installation d'aspiration à nettoyer,

Enfin, afin de simplifier le tout, le système de ventilation général peut également comprendre le système de dérivation intégré avec un clapet à l'intérieur pour ou non l'utiliser que l'on nettoie le système ou pas.

Le second aspect de l'invention est le procédé de nettoyage du système de ventilation décrit plus haut. Ce procédé comprend d'abord, mais optionnellement, une étape préliminaire d'arrêt des générateurs de dépression et de surpression. Cela pour plus de sécurité.

Par la suite, le procédé comprend une étape de mise en place d'un système de dérivation entre l'installation de pulsion et l'installation de reprise afin de les mettre en communication fluidique, via l'installation d'un conduit ou d'une gaine ou simplement, si le système est permanent, via l'ouverture d'un clapet par exemple.

Ensuite, on met en œuvre une première étape d'actionnement des systèmes de premiers clapets pour couper la communication entre les conduits d'aspiration et le générateur de dépression et une seconde étape d'actionnement des systèmes de seconds clapets pour diriger et concentrer une dépression dans un premier système de conduits de l'installation de pulsion où les travaux de nettoyage sont réalisés. Enfin, on contrôle le générateur de dépression sorte à générer la dépression souhaitée dans le conduit choisi précédemment.

Une fois le conduit propre, on répète la seconde étape d'actionnement des systèmes de seconds clapets et l'étape de contrôle du générateur pour chaque conduit de l'installation de pulsion où les travaux de nettoyage sont réalisés.

Optionnellement comme indiqué plus haut, le procédé comprend une étape de brossage des conduits où les travaux de nettoyage sont réalisés antérieure à l'étape de contrôle du générateur.

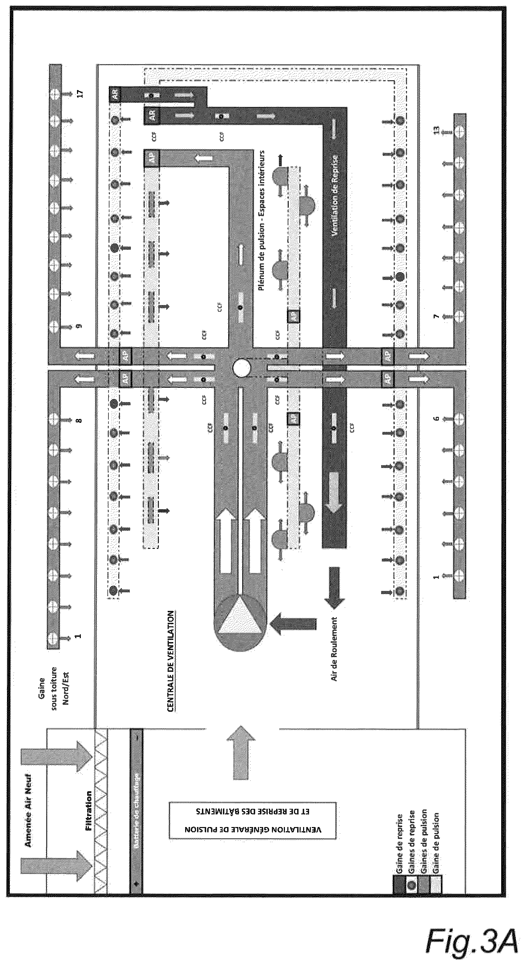

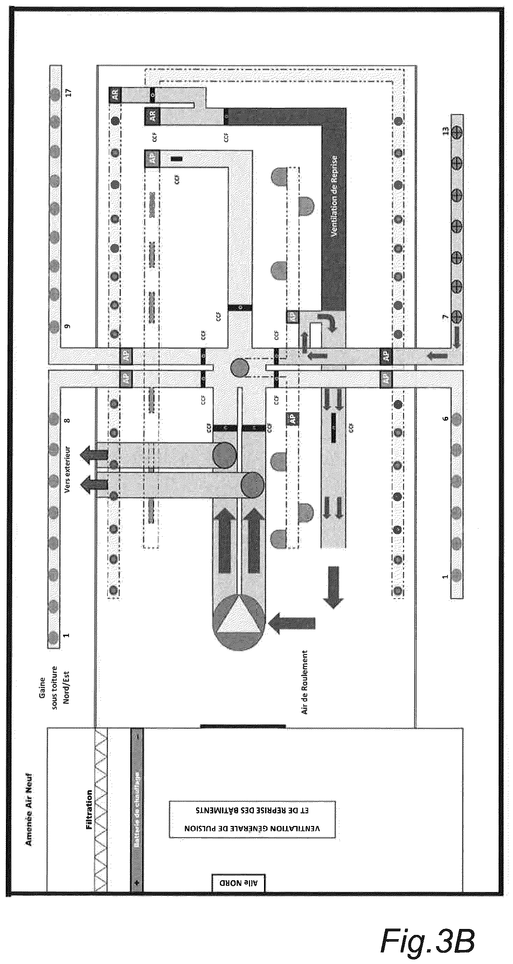

Les figures 3A et 3B représentent un exemple spécifique d'une installation de pulsion avec possibilité (registre de fermeture asservi) d'injecter une partie d'air de roulement. Dans ce cas, là, pour réaliser le nettoyage des gaines de pulsion, il suffit de créer la dépression dans les gaines de pulsion en utilisant le ventilateur double ouïes de l'installation en prenant l'air neuf dans les gaines de pulsion et non plus à l'extérieur du bâtiment.

Cette technique permet de mettre l'installation en dépression et de refouler l'air vicié vers l'extérieur.

La figure 3A montre le fonctionnement normal de l'installation de pulsion avec la possibilité de réinjecter une petite quantité d'air de roulement dans l'installation de pulsion.

La figure 3B montre l'utilisation des clapets coupe-feu et des registres de fermeture (clapets) pour guider et concentrer la dépression sur la gaine à nettoyer.

L'installation de la dérivation sur la gaine d'air de roulement qui permet de guider l'air extrait jusqu'au ventilateur (en lieu et place de l'amenée d'air neuf).

Enfin, l'utilisation de la gaine de distribution pour refouler l'air vicié vers l'extérieur par le biais de la dérivation.

Ce dispositif est répété pour toutes les branches en les connectant au fur et à mesure de l'avancement des travaux, jusqu'à traiter toutes les gaines de pulsion du bâtiment.

## Revendications

1. Système de ventilation pour un bâtiment , comprenant une installation de reprise et une installation de pulsion,
l'installation de reprise comprenant un système de conduits (10', 11') et de clapets (8, 9) et un générateur de dépression (5) destinés à aspirer de l'air intérieur au bâtiment,
l'installation de pulsion comprenant un système de conduits (10, 11) et de clapets (8, 9) et un générateur de surpression (6) destinés à envoyer de l'air extérieur dans le bâtiment,
**caractérisé en ce que** lors d'un nettoyage de l'installation de pulsion du système de ventilation lesdits clapets (8, 9) de l'installation de reprise sont agencés pour couper la communication entre les conduits d'aspiration (10', 11') et le générateur de dépression (5), et- lesdits clapets (8, 9) de l'installation de pulsion sont agencés pour diriger et concentrer une dépression dans un premier système de conduits (10) de l'installation de pulsion où les travaux de nettoyage doivent être réalisés, et
l'installation de pulsion et l'installation de reprise sont agencées pour être mises en communication par un système de dérivation (12), de sorte que le générateur de dépression (5) de l'installation de reprise puisse générer une dépression dans le système de conduits (10, 11) de l'installation de pulsion.

2. Système de ventilation selon la revendication 1, **caractérisé en ce que** le générateur de dépression (5) et le générateur de surpression (6) sont logés dans un même monobloc double flux (1) comprenant un flux de pulsion et un flux de reprise.

3. Système de ventilation selon les revendications 1 ou 2, **caractérisé en ce que** les systèmes de clapets comprennent des clapets coupe-feu (8) et/ou des clapets de réglages de débits d'air (9).

4. Système de ventilation selon la revendication 1 à 3, **caractérisé en ce que** lors d'un nettoyage de l'installation d'aspiration du système de ventilation, les systèmes de clapets (8, 9) sont agencés pour diriger et concentrer la dépression dans le système de conduits (10', 11') de l'installation d'aspiration où les travaux de nettoyage sont réalisés.

5. Système de ventilation selon l'une quelconque des revendications 1 à 4, **caractérisé en ce que** le système de dérivation (12) comprend un conduit détachable reliant un conduit d'aspiration (11') à un conduit de pulsion (11) en amont du générateur de dépression (5).

6. Système de ventilation selon l'une quelconque des revendications 1 à 5, **caractérisé en ce qu'**il comprend le système de dérivation (12) intégré.

7. Procédé de nettoyage d'un système de ventilation selon l'une quelconque des revendications 1 à 6, comprenant
- une étape de mise en place du système de dérivation (12) entre l'installation de pulsion et l'installation de reprise afin de les mettre en communication fluidique,
- une première étape d'actionnement de systèmes de premiers clapets (8) pour couper la communication entre les conduits d'aspiration (10', 11') et le générateur de dépression (5),
- une seconde étape d'actionnement de systèmes de seconds clapets (8, 9) pour diriger et concentrer une dépression dans un premier système de conduits (10) de l'installation de pulsion où les travaux de nettoyage sont réalisés, et
- une étape de contrôle du générateur de dépression (5) de sorte à générer ladite dépression.

8. Procédé de nettoyage d'un système de ventilation selon la revendication 7, caractérisé en qu'il comprend en outre une étape préliminaire d'arrêt des générateurs de dépression et de surpression (5, 6).

9. Procédé de nettoyage d'un système de ventilation selon la revendication 7 ou 8, **caractérisé en ce que** la seconde étape d'actionnement des systèmes de seconds clapets (8, 9) et l'étape de contrôle du générateur sont répétées pour chaque conduit de l'installation de pulsion où les travaux de nettoyage sont réalisés.

10. Procédé de nettoyage d'un système de ventilation selon la revendication 7, 8 ou 9, caractérisé en qu'il comprend en outre une étape de brossage des conduits où les travaux de nettoyage sont réalisés antérieure à l'étape de contrôle du générateur.

11. Procédé de nettoyage d'un système de ventilation selon l'une quelconque des revendications 7 à 10, caractérisé en que les deux étapes d'actionnement de clapets (8, 9) sont Simultanées.

## Patentansprüche

1. Lüftungssystem für ein Gebäude, umfassend eine Abluftanlage und eine Zuluftanlage,
wobei die Abluftanlage ein System aus Leitungen (10', 11') und Klappen (8, 9) und einen Unterdruckerzeuger (5), die dazu bestimmt sind, Innenluft des Gebäudes anzusaugen, umfasst,
wobei die Zuluftanlage ein System aus Leitungen (10, 11) und Klappen (8, 9) und einen Überdruckerzeuger (6), die dazu bestimmt sind, Außenluft in das Gebäude zu schicken, umfasst,
**dadurch gekennzeichnet, dass** bei einer Reinigung der Zuluftanlage des Lüftungssystems die Klappen (8, 9) der Abluftanlage dazu eingerichtet sind, die Verbindung zwischen den Saugleitungen (10', 11') und dem Unterdruckerzeuger (5) zu unterbrechen, und die Klappen (8, 9) der Zuluftanlage dazu eingerichtet sind, einen Unterdruck in ein erstes Leitungssystem (10) der Zuluftanlage zu leiten und zu konzentrieren, in dem die Reinigungsarbeiten ausgeführt werden sollen, und die Zuluftanlage und die Abluftanlage dazu eingerichtet sind, durch ein Bypass-System (12) in Verbindung gebracht zu werden, so dass der Unterdruckerzeuger (5) der Abluftanlage einen Unterdruck im Leitungssystem (10, 11) der Zuluftanlage erzeugen kann.

2. Lüftungssystem nach Anspruch 1, **dadurch gekennzeichnet, dass** der Unterdruckerzeuger (5) und der Überdruckerzeuger (6) in demselben Zweistrom-Monoblock (1) untergebracht sind, der einen Zuluftstrom und einen Abluftstrom umfasst.

3. Lüftungssystem nach den Ansprüchen 1 oder 2, **dadurch gekennzeichnet, dass** die Klappensysteme Brandschutzklappen (8) und/oder Luftvolumenstrom-Einstellklappen (9) umfassen.

4. Lüftungssystem nach Anspruch 1 bis 3, **dadurch gekennzeichnet, dass** bei einer Reinigung der Ansauganlage des Lüftungssystems die Klappensysteme (8, 9) dazu eingerichtet sind, den Unterdruck in das Leitungssystem (10', 11') der Sauganlage zu leiten und zu konzentrieren, in dem die Reinigungsarbeiten ausgeführt werden.

5. Lüftungssystem nach einem der Ansprüche 1 bis 4, **dadurch gekennzeichnet, dass** das Bypass-System (12) eine lösbare Leitung umfasst, die eine Ansaugleitung (11') mit einer Zuluftleitung (11) stromauf des Unterdruckerzeugers (5) verbindet.

6. Lüftungssystem nach einem der Ansprüche 1 bis 5, **dadurch gekennzeichnet, dass** es das integrierte Bypass-System (12) umfasst.

7. Verfahren zum Reinigen eines Lüftungssystems nach einem der Ansprüche 1 bis 6, umfassend
- einen Schritt des Einrichtens des Bypass-Systems (12) zwischen der Zuluftanlage und der Abluftanlage, um sie in Fluidverbindung zu bringen,
- einen ersten Schritt des Betätigens von Systemen erster Klappen (8), um die Verbindung zwischen den Ansaugleitungen (10', 11') und dem Unterdruckerzeuger (5) zu unterbrechen,
- einen zweiten Schritt des Betätigens von Systemen zweiter Klappen (8, 9), um einen Unterdruck in ein erstes Leitungssystem (10) der Zuluftanlage zu leiten und zu konzentrieren, in dem die Reinigungsarbeiten ausgeführt werden, und
- einen Schritt des Steuerns des Unterdruckerzeugers (5), so dass der Unterdruck erzeugt wird.

8. Verfahren zum Reinigen eines Lüftungssystems nach Anspruch 7, **dadurch gekennzeichnet, dass** es ferner einen vorherigen Schritt des Abschaltens der Unterdruck- und Überdruckerzeuger (5, 6) umfasst.

9. Verfahren zum Reinigen eines Lüftungssystems nach Anspruch 7 oder 8, **dadurch gekennzeichnet, dass** der zweite Schritt des Betätigens der Systeme zweiter Klappen und der Schritt des Steuerns des Erzeugers für jede Leitung der Zuluftanlage, in der die Reinigungsarbeiten ausgeführt werden, wiederholt werden.

10. Verfahren zum Reinigen eines Lüftungssystems nach Anspruch 7, 8 oder 9, **dadurch gekennzeichnet, dass** es ferner einen Schritt des Abbürstens der Leitungen, in denen die Reinigungsarbeiten ausgeführt werden, vor dem Schritt des Steuerns des Erzeugers umfasst.

11. Verfahren zum Reinigen eines Lüftungssystems nach einem der Ansprüche 7 bis 10, **dadurch gekennzeichnet, dass** die beiden Schritte des Betätigens von Klappen (8, 9) gleichzeitig ablaufen.

## Claims

1. A ventilation system for a building, comprising a return installation and a pulse installation,
the return installation comprising a system of ducts (10', 11') and valves (8, 9) and a vacuum generator (5) intended to suck air inside the building,
the pulse installation comprising a system of ducts (10, 11) and valves (8, 9) and a booster generator (6) intended to send outside air into the building,
**characterized in that**, during cleaning of the pulse installation of the ventilation system, said valves (8, 9) of the return installation are arranged to cut off the communication between the suction ducts (10', 11') and the vacuum generator (5),
said valves (8, 9) of the pulse installation are arranged to direct and concentrate a vacuum in a first system of ducts (10) of the pulse installation where the cleaning works should be carried out, and
the pulse installation and the return installation are arranged to be put into communication by a bypass system (12), so that the vacuum generator (5) of the return installation could generate a vacuum in the system of ducts (10, 11) of the pulse installation.

2. The ventilation system according to claim 1, **characterized in that** the vacuum generator (5) and the booster generator (6) are housed in the same double-flow monoblock (1) comprising a pulse flow and a return flow.

3. The ventilation system according to claims 1 or 2, **characterized in that** the systems of valves comprise fire-damper valves (8) and/or air flow adjusting valves (9).

4. The ventilation system according to claim 1 to 3, **characterized in that**, during cleaning of the suction installation of the ventilation system, the systems of valves (8, 9) are arranged to direct and concentrate the vacuum in the system of ducts (10', 11') of the suction installation where the cleaning works are carried out.

5. The ventilation system according to any one of claims 1 to 4, **characterized in that** the bypass system (12) comprises a detachable duct connecting a suction duct (11') to a pulse duct (11) upstream of the vacuum generator (5).

6. The ventilation system according to any one of claims 1 to 5, **characterized in that** it comprises the bypass system (12) integrated.

7. A method for cleaning a ventilation system according to any one of claims 1 to 6, comprising
- a step of setting up the bypass system (12) between the pulse installation and the return installation in order to put them into fluid communication,
- a first step of actuating systems of first valves (8) to cut off the communication between the suction ducts (10', 11') and the vacuum generator (5),
- a second step of actuating systems of second valves (8, 9) to direct and concentrate a vacuum in a first system of ducts (10) of the pulse installation where the cleaning works are carried out, and
- a step of controlling the vacuum generator (5) so as to generate said vacuum.

8. The method for cleaning a ventilation system according to claim 7, **characterized in that** it further comprises a preliminary step of stopping the vacuum and booster generators (5, 6).

9. The method for cleaning a ventilation system according to claim 7 or 8, **characterized in that** the second step of actuating the systems of second valves (8, 9) and the step of controlling the generator are repeated for each duct of the pulse installation where the cleaning works are carried out.

10. The method for cleaning a ventilation system according to claim 7, 8 or 9, **characterized in that** it further comprises a step of brushing the ducts where the cleaning works are carried out prior to the step of controlling the generator.

11. The method for cleaning a ventilation system according to any one of claims 7 to 10, **characterized in that** the two steps of actuating valves (8, 9) are simultaneous.
